# EUROPÄISCHE PATENTSCHRIFT

(11) **EP 0 760 302 B1**
(45) Veröffentlichungstag und Bekanntmachung des Hinweises auf die Patenterteilung: **07.04.1999**
(21) Anmeldenummer: 96113522.5
(22) Anmeldetag: 23.08.1996
(51) Int. Cl.: B60J 7/057

(54) **Antriebsvorrichtung für Schiebedächer für Kraftfahrzeuge**
Driving system for sliding roofs of motor vehicles
Système d'entraînement pour toits coulissants de véhicules automobiles

(30) Priorität: 26.08.1995 DE 19531514
(43) Veröffentlichungstag der Anmeldung: 05.03.1997
(73) Patentinhaber: Meritor Automotive GmbH, 60314 Frankfurt (DE)
(72) Erfinder: Boss, Christoph, 60599 Frankfurt (DE); Bachmann, Hubert, Dipl.-Ing., 67125 Dannstadt (DE)
(74) Vertreter: Oppermann, Ewald, Dipl.-Ing.

(56) Entgegenhaltungen:
- FR-A- 2 159 105
- FR-A- 2 467 723

## Beschreibung

Die Erfindung bezieht sich auf eine Antriebsvorrichtung für Schiebedächer für Kraftfahrzeuge, entsprechend den Oberbegriffsmerkmalen des Anspruchs 1.

Derartige Antriebsvorrichtungen sind in verschiedenen Ausführungsformen bekannt (z.B. DE 12 06 740 C2, DE 38 03 816 A1, DE 38 09 949 A1). Diesen bekannten Antriebsvorrichtungen ist gemeinsam, daß die Führungskanäle im Bereich des Zahnritzeleingriffs mit den Antriebskabeln als Flanschwände eines aus Metallblech oder Federstahl U-förmig gebogenen Führungsteils ausgebildet sind, daß ihr Antriebsgehäuse zweiteilig ausgebildet ist, und daß die Drehlager für das Antriebszahnritzel bzw. seiner Antriebswelle im Antriebsgehäuse angebracht sind. Infolge des zahnstangenähnlichen Eingriffs der Zähne des Antriebszahnritzels mit den Arbeitswicklungen der im übrigen flexiblen Antriebskabel werden diese an den Zahneingriffstellen nach außen bis zur Anlage an die Blechflansche des Führungsteils gedrückt. Bei Drehantrieb des Antriebszahnritzels kann es daher zu unerwünschter Geräuschbildung kommen, weil die Arbeitswicklungen über konstruktiv bedingte Kanten unter Andruck gleiten.

Die britische Patentschrift 787 765 zeigt weiterhin eine gattungsfremde Antriebsvorrichtung, bei der an einem Antriebsgehäuse ein Antriebszahnritzel drehbar angeordnet ist, das mit auf einem Draht angeordneten scheibenförmigen Elementen im Eingriff steht, wobei das so gebildete Antriebskabel in einem Führungskanal des Antriebsgehäuses drucksteif verschiebbar geführt ist, wobei der Führungskanal für den fluchtenden Anschluß einer Antriebskabelführung vorgesehen ist, **wobei weiterhin** der Führungskanal einen mittleren hohlzylindrischen Abschnitt aufweist, dessen Länge etwas größer als der Kopfkreisdurchmesser des Antriebszahnritzels ist und dessen Durchmesser so bemessen ist, daß der hohlzylindrische Abschnitt das Antriebskabel mit Radialspiel umschließt, und wobei an den mittleren hohlzylindrischen Abschnitt zu beiden Seiten jeweils ein aufgeweiteter Endabschnitt angeschlossen ist, dessen kleinster Durchmesser mit dem Durchmesser des mittleren hohlzylindrischen Abschnitts übereinstimmt und dessen größter Durchmesser größer ist als der Durchmesser der anzuschließenden Antriebskabelführung, wobei das Antriebszahnritzel in der Mitte des mittleren hohlzylindrischen Abschnitts in die Elemente des Antriebskabels eingreift. Auf der anderen Seite des Antriebsritzels ist bei einer Ausführungsform ein in die Elemente des Antriebskabels eingreifendes Stützrad vorgesehen.

Der Erfindung liegt die Aufgabe zugrunde, eine Antriebsvorrichtung der eingangs bezeichneten Ausführung bereitzustellen, bei welcher die Betriebsgeräusche auf konstruktiv einfache Weise mindestens erheblich vermindert werden.

Diese Aufgabe wird durch die Merkmale des Anspruchs 1 gelöst. Vorteilhafte oder zweckmäßige Weiterbildungen sind in den Unteransprüchen angegeben und nachstehend ebenfalls näher erläutert.

Durch die erfindungsgemäße besondere Gestaltung der Führungskanäle im Antriebsgehäuse wird eine im mittleren Abschnitt der Führungskanäle sehr spielarme Führung von bezogen auf den Kopfkreisdurchmesser des Antriebszahnritzels beträchtlicher Länge erzielt, die eine ratterfreie Verschiebung der Antriebskabel ermöglicht, zumal die erfindungsgemäße Lösung auf ein U-förmig gebogenes Blechführungsteil verzichtet, wodurch die Antriebsvorrichtung auch erheblich vereinfacht und verbilligt wird. Wenn die Länge des mittleren hohlzylindrischen Abschnitts der Führungskanäle, wie im Anspruch 1 angegeben, mindestens etwa dem zweifachen Kopfkreisdurchmesser des Antriebszahnritzels entspricht, wird erreicht, daß die Antriebskabel praktisch seitendruckfrei aus der Antriebsvorrichtung in zentrierter Lage in die dann anschließenden Antriebskabelführungen eindringen, wodurch auch an diesen Stoßstellen keine Betriebsgeräusche auftreten können. Die Antriebskabel treten dabei gut zentriert aus den Führungskanälen des Antriebsgehäuses aus, ggf. unterstützt durch eine zwischen den Windungen der Arbeitswicklung der Antriebskabel angebrachte Kunststoffbeflockung.

Bei der im Anspruch 2 angegebenen Ausbildung des Antriebsgehäuses werden durch die Anbringung der zentralen Aufnahmebohrung auf einfache Weise sowohl Raum für die Unterbringung des Antriebszahnritzels geschaffen als auch an gegenüberliegenden Stellen Öffnungen in den mittleren hohlzylindrischen Abschnitten der Führungskanäle für den Eingriff des Antriebszahnritzels mit den Antriebskabeln vorgesehen.

Die Erfindung ermöglicht gemäß Anspruch 3 vorteilhaft eine Aufteilung der Antriebsvorrichtung in ein die Antriebskabel aufnehmendes und führendes Antriebsgehäuse und ein den manuellen oder elektromotorischen Antrieb sowie das Antriebszahnritzel aufnehmendes Getriebegehäuse. Bei der Montage wird das Antriebsgehäuse dem Führungsrahmen von oben aufgesetzt, während das Getriebegehäuse von unten an dem Führungsrahmen zur Anlage gelangt, wobei das Antriebszahnritzel durch eine entsprechende Ausnehmung des Führungsrahmens hindurch in die zentrale Aufnahmebohrung des Antriebsgehäuses in definierter Weise eintritt und wobei beide Gehäuse unter Zentrierung miteinander verschraubt und gleichzeitig am Führungsrahmen in genau vorbestimmter Position fixiert werden.

Zweckmäßig ist der Führungsrahmen zur Anbringung des Antriebsgehäuses wie im Anspruch 4 angegeben ausgebildet. Durch die partielle Unterbrechung der am Führungsrahmen befindlichen Antriebskabelführungen wird am Führungsrahmen einerseits eine ebene obere Montagefläche für das Antriebsgehäuse erzeugt, und andererseits werden die dabei entstandenen Endbereiche der Antriebskabelführungen als Zentrierelemente für das entsprechend ausgebildete Antriebsgehäuse nutzbar gemacht.

Der Zentrierung des Antriebsgehäuses gegenüber dem Führungsrahmen dient die im Anspruch 5 angegebene Anbringung von Stufen an der Außenkontur des Antriebsgehäuses, die mit den durch die Unterbrechung erzeugten Endbereichen der Antriebskabelführungen zusammenwirken.

Wie aus Anspruch 6 hervorgeht, ermöglicht die Erfindung eine vorteilhafte einteilige Ausbildung des Antriebsgehäuses. Das Antriebsgehäuse läßt sich auf einfache Weise unter gleichzeitiger Erzeugung aller Bohrungen, Hohlräume und Außenkonturen einschließlich der beiden Führungskanäle und der zentralen Aufnahmebohrung für das Antriebszahnritzel spritzformen und bedarf keiner Nachbearbeitung. Die Verwendung eines abriebfesten Kunststoffes zur Spritzformung des Antriebsgehäuses ermöglicht auch ohne nennenswerte zusätzliche Schmierung zwischen dem Antriebsgehäuse und den Antriebskabeln gute Gleiteigenschaften. Durch Wahl eines entsprechend abriebfesten Kunststoffes wird einem vorzeitigen Verschleiß des Antriebsgehäuses entgegengewirkt. Im übrigen aber läßt sich das Antriebsgehäuse leicht auswechseln, ohne daß andere Elemente der Antriebsvorrichtung, wie etwa das Getriebegehäuse, mit ausgewechselt werden müßten.

Die Erfindung wird nachfolgend anhand der Ausführungsbeispiele darstellenden Zeichnungen näher erläutert. Darin zeigt:
- Fig. 1: die Draufsicht auf einen Führungsrahmen mit montierter Antriebsvorrichtung,
- Fig. 2: die abgebrochene Draufsicht auf den mittleren Bereich des vorderen Querteils des Führungsrahmens, vorbereitet für die Montage der Antriebsvorrichtung,
- Fig. 3: die Draufsicht auf das Antriebsgehäuse,
- Fig. 4 bis Fig. 6: Schnitte durch das Antriebsgehäuse entsprechend den Schnittverlaufslinien IV-IV, V-V und VI-VI in Fig. 3,
- Fig. 7: die Draufsicht gemäß Fig. 2, jedoch mit montierter Antriebsvorrichtung,
- Fig. 8: den vertikalen Schnitt durch die Anordnung entsprechend der Linie VIII-VIII in Fig. 7,
- Fig. 9: den Querschnitt entsprechend der Linie IX-IX in Fig. 7,
- Fig. 10: den horizontalen Schnitt durch die Anordnung entsprechend der Linie X-X in Fig. 8 und
- Fig. 11: einen der Fig. 9 ähnlichen Querschnitt, jedoch mit einer handbetätigten Antriebsvorrichtung.

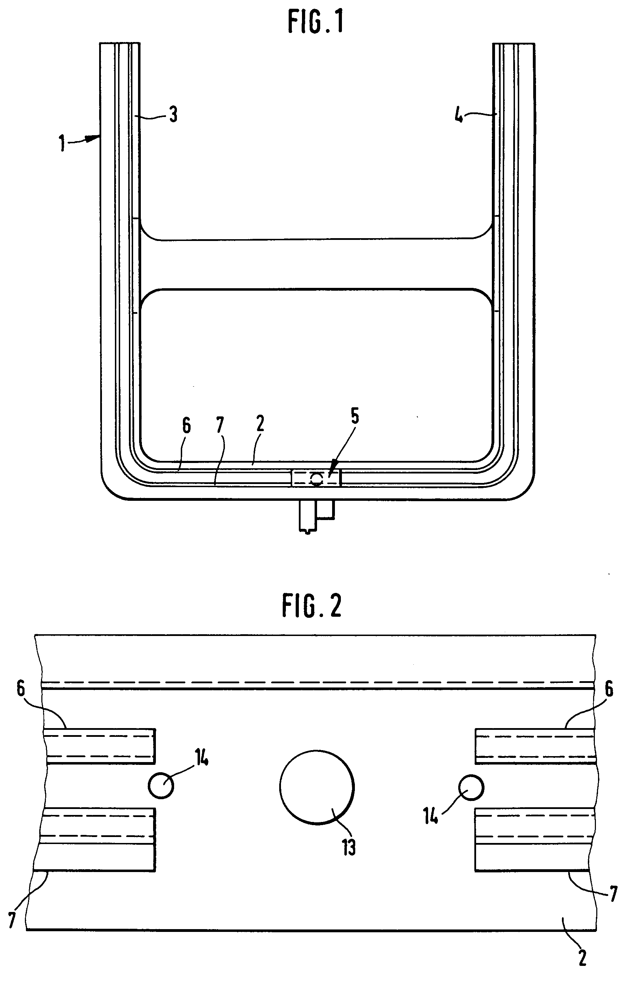

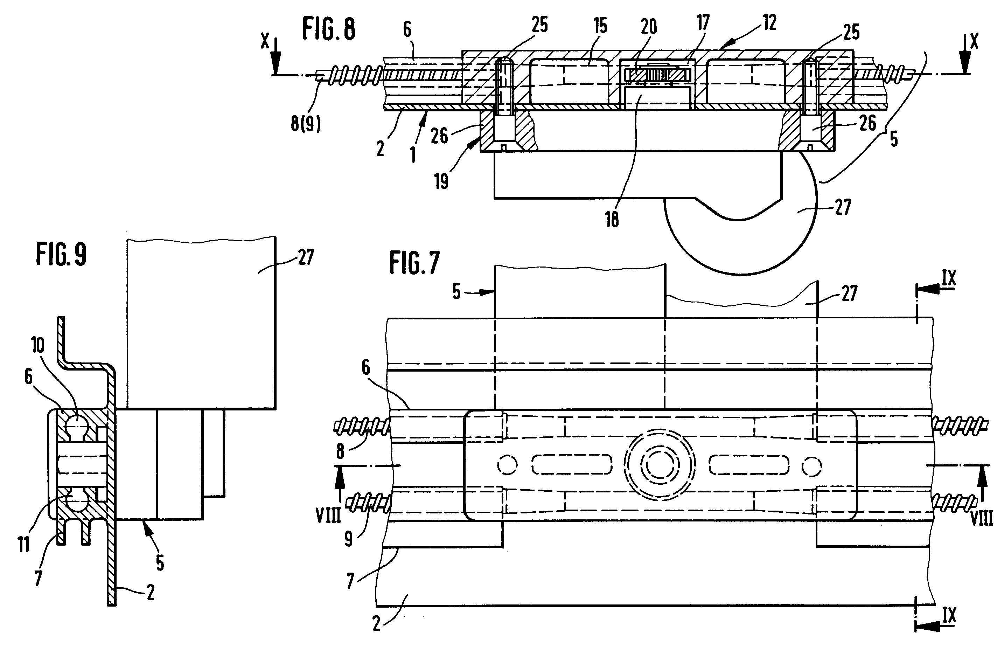

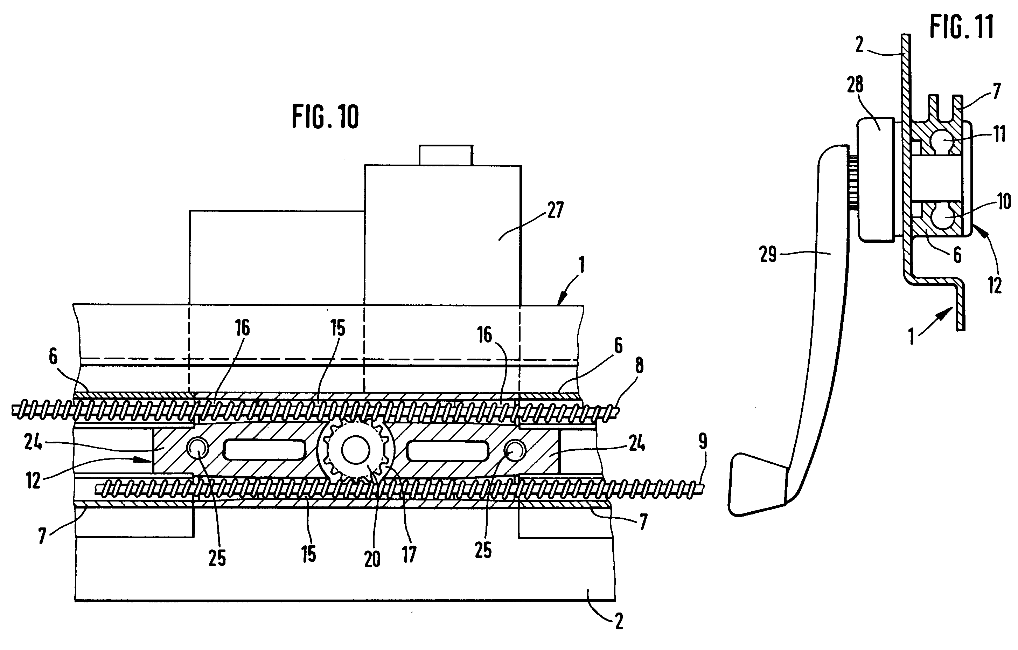

Der aus Fig. 1 ersichtliche Führungsrahmen 1 besteht im wesentlichen aus einem vorderen Rahmenquerteil 2 und daran über abgerundete Ecken angeschlossenen seitlichen Rahmenteilen 3 und 4. In der Mitte des Rahmenquerteils 2 ist die Antriebsvorrichtung 5 angebracht. Im gezeichneten Beispiel ist ein einteiliger Führungsrahmen 1 dargestellt, der aus einem anfänglich geradlinigen Aluminium-Strangpreßprofil an den Ecken gebogen ist. Einteiliger Bestandteil des Führungsrahmens 1 sind zwei Antriebskabelführungen 6 und 7, deren Querschnitte aus den Fig. 9 und 11 hervorgehen. Die beiden Antriebskabelführungen verlaufen an allen Rahmenteilen parallel zueinander in einem gleichbleibenden gegenseitigen Abstand. Die Antriebskabelführungen 6 und 7 führen nicht nur darin drucksteif verschiebbare Antriebskabel 8 und 9 in entsprechenden Kanälen 10 und 11, sondern auch die übrigen nicht dargestellten Elemente der Schiebedachkonstruktion. Unter der Bezeichnung Schiebedächer werden hier alle gebräuchlichen Konstruktionen verstanden, bei denen ein einer Dachöffnung zugeordneter Deckel verschiebbar und/oder schwenkbar geführt ist. Abweichend von der in Fig. 1 gezeichneten Ausführungsform kann der Führungsrahmen auch aus einzelnen Rahmenteilen gefertigt und zusammengefügt sein.

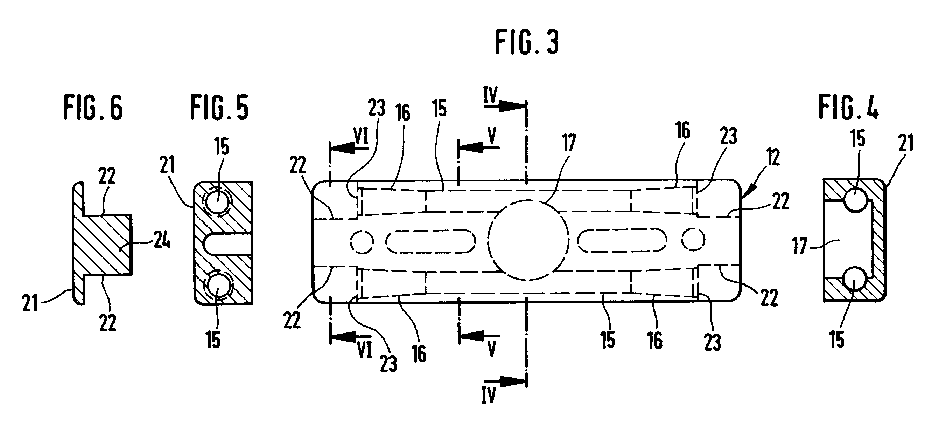

Wie insbesondere aus Fig. 2 hervorgeht, sind die Antriebskabelführungen 6 und 7 an dem für den Einbau eines in den Fig. 3 bis 6 als Einzelteil dargestellten Antriebsgehäuses 12 vorgesehenen Bereich in gleicher Länge unterbrochen, beispielsweise durch Abfräsen der Antriebskabelführungen 6 und 7 in diesem Bereich. Dadurch entsteht im mittleren Bereich des Rahmenquerteils 2 für das Antriebsgehäuse 12 eine nach oben weisende ebene Montageplattform, in welcher sich eine mittlere Durchtrittsöffnung 13 und zwei seitliche Befestigungsbohrungen 14 befinden. Zur Beschreibung des auf die Unterbrechungslänge der Antriebskabelführungen 6 und 7 genau abgestimmten Antriebsgehäuses 12 wird nunmehr auf die Fig. 3 bis 6 Bezug genommen.

Das beispielsweise aus Polyamid 66 spritzgeformte Antriebsgehäuse 12 ist von langgestreckter etwa quaderförmiger Gestalt. In ihm befinden sich zwei parallele beabstandete Führungskanäle, deren gegenseitiger Abstand dem Abstand zwischen den Kanälen 10 und 11 in den Antriebskabelführungen 6 und 7 genau entspricht. Die beiden Führungskanäle im Antriebsgehäuse 12 weisen jeweils einen mittleren hohlzylindrischen Abschnitt 15 und zu beiden Seiten übereinstimmende hohlkegelstumpfartige Endabschnitte 16 auf. Der Durchmesser der mittleren hohlzylindrischen Abschnitte 15 ist so bemessen, daß in diesen Abschnitten die Antriebskabel 8 und 9 bzw. deren schraubenlinienförmige Arbeitswicklungen durch die Wandflächen der hohlzylindrischen Abschnitte mit geringem Radialspiel eng umschlossen sind. Die Antriebskabel 8 und 9 sollen aber innerhalb der Abschnitte 15 leicht in axialer Richtung verschiebbar sein. Die hohlkegelstumpfartigen Endabschnitte 16 sind so bemessen, daß deren kleinster Durchmesser mit dem Durchmesser der mittleren hohlzylindrischen Abschnitte 15 übereinstimmt, während deren größter Durchmesser mindestens so groß ist wie der Durchmesser der Kanäle 10 in den beidseitig anzuschließenden Antriebskabelführungen 6 und 7.

Das Antriebsgehäuse 12 ist mit einer zentralen Aufnahmebohrung 17 für ein fliegend an einem zylindrischen Vorsprung 18 eines Getriebegehäuses 19 in beiden Richtungen drehend antreibbar gelagerten Antriebszahnritzels 20 versehen (Fig. 8). Die Aufnahmebohrung 17 ist als Blindbohrung ausgeführt und senkrecht zu den Führungskanälen 15, 16 gerichtet. Der Durchmesser der Aufnahmebohrung 17 entspricht etwa dem Abstand zwischen den Mittellinien der Führungskanäle 15, 16. Der Durchmesser der Durchtrittsöffnung 13 im Rahmenquerteil 2 stimmt mit dem Durchmesser der Aufnahmebohrung 17 überein, so daß das Antriebszahnritzel 20 mit ausreichendem Radialspiel von unten her durch die Durchtrittsöffnung 13 hindurch in die Aufnahmebohrung 17 eingeführt werden kann. Die Aufnahmebohrung 17 durchdringt die mittleren Abschnitte 15 der Führungskanäle, wie aus Fig. 4 besonders deutlich wird, und legt dadurch die Abschnitte 15 im Bereich des Eingriffs zwischen den Antriebskabeln 8 und 9 mit dem Antriebszahnritzel 20 frei. Bei der Montage kommt daher das Antriebszahnritzel 20 mit den schraubenlinienförmigen Arbeitswicklungen der beiden Antriebskabel 8 und 9 in Zahneingriff. Drehungen des Antriebszahnritzels 20 führen zu gegenläufigen Verschiebebewegungen der Antriebskabel.

Im gezeichneten Beispiel sind die beiden mittleren hohlzylindrischen Abschnitte 15 der Führungskanäle etwa dreimal so lang wie der Kopfkreisdurchmesser des Antriebszahnritzels 20. Diese Führungslänge läßt die Antriebskabel 8 und 9 praktisch seitendruckfrei aus dem Antriebsgehäuse 12 aus- und in die benachbarten Kanäle 10 und 11 der Antriebskabelführungen 6 und 7 eintreten.

Das Antriebsgehäuse 12 wird bezüglich der Antriebskabelführungen 6 und 7 am Rahmenquerteil 2 auf folgende Weise zentriert. An den beiden Enden des Antriebsgehäuses 12 befinden sich stufenförmige Ausnehmungen der Umfangskontur des Antriebsgehäuses 12, die sowohl bezüglich der Quermittelachse als auch bezüglich der Längsmittelachse des Antriebsgehäuses 12 symmetrisch angeordnet sind. Die stufenförmigen Ausnehmungen sind nicht über die volle Höhe des Antriebsgehäuses 12 geführt, sondern enden ausgehend von der Montagefläche des Antriebsgehäuses 12, d.h. von seiner unteren Fläche, vor Erreichen der oberen Deckfläche 21 des Antriebsgehäuses. Jede der vier stufenförmigen Ausnehmungen wird aus einer der benachbarten Antriebskabelführung zugeordneten seitlichen Zentrierfläche 22 und einer dem stirnseitigen Ende der benachbarten Antriebskabelführung zugeordneten Stufenfläche 23 gebildet. Auf diese Weise entstehen an beiden Enden des Antriebsgehäuses 12 Zentriervorsprünge 24, welche genau in den Abstand zwischen den Antriebskabelführungen 6 und 7 passen, wie Fig. 10 verdeutlicht. Der Abstand zwischen den Stufenflächen 23 auf jeder Seite der Längsachse des Antriebsgehäuses 12 ist so ausgeführt, daß bei der Montage die Unterbrechungsstellen der beiden Antriebskabelführungen 6 und 7 axial spielfrei überbrückt werden. Auf diese Weise erfolgt eine sichere und bei der Montage sich automatisch ergebende Zentrierung des Antriebsgehäuses 12 bezüglich der beiderseitigen Antriebskabelführungen 6 und 7 bzw. der darin enthaltenen Kanäle 10 und 11.

Zu beiden Seiten der Aufnahmebohrung 17 befinden sich Gewindebohrungen 25 im Antriebsgehäuse 12, deren Abstand dem Abstand der Befestigungsbohrungen 14 im Rahmenquerteil 2 entspricht. Entsprechende Paßbohrungen sind auch im Getriebegehäuse 19 vorgesehen, durch welche von unten her Paßschrauben 26 eingeführt sind, die mit den Gewindebohrungen 25 nach der Montage im Gewindeeingriff stehen. Durch die Paßbohrungen und Paßschrauben ist die Zentrierung des Getriebegehäuses 19 gegenüber dem Antriebsgehäuse 12 sichergestellt, wobei zugleich beide Gehäuseteile, nämlich das Antriebsgehäuse 12 und das Getriebegehäuse 19, am Rahmenquerteil 2 befestigt sind, wie Fig. 8 verdeutlicht.

In den Fig. 1 und 7 bis 10 ist ein elektromotorischer Antrieb dargestellt, bei welchem ein Getriebemotor 27 mit dem Getriebegehäuse 19 vereinigt ist.

Bei dem Ausführungsbeispiel gemäß Fig. 11 ist das Getriebegehäuse 19 durch eine Antriebsrosette 28 ersetzt, welche auf die mit Bezug auf Fig. 8 beschriebene Weise mit dem Antriebsgehäuse 12 verschraubt ist. Der Antrieb erfolgt hier von Hand über eine Bedienungskurbel 29.

Es wird eine aus einem Antriebsgehäuse 12 und einem Getriebegehäuse 19 bestehende Antriebsvorrichtung 5 vorgeschlagen, bei welcher beide Gehäuse 12, 19 unter Zwischenlage einer ebenen Wand des vorderen Rahmenquerteils 2 eines Führungsrahmens 1 miteinander in zentrierter Position zueinander und zum Rahmenquerteil 2 verschraubt sind. Das vorzugsweise aus einem abriebfesten thermoplastischen Kunststoff einteilig spritzgeformte Antriebsgehäuse 12 führt zwei Antriebskabel 8, 9 mit im mittleren Abschnitt 15 engen Führungskanälen 15, 16 über eine solche Länge, daß die Antriebskabel 8, 9 zu beiden Seiten praktisch seitendruckfrei aus dem Antriebsgehäuse 12 aus- und in die Antriebskabelführungen des Rahmenquerteils 2 eintreten können. Das Antriebsgehäuse 12 erlaubt geführte radialspielarme Schiebebewegungen der Antriebskabel ohne durch Stoßstellen verursachte Geräusche. Aufgrund der besonderen Ausbildung des Antriebsgehäuses 12 und des damit zusammenwirkenden Getriebegehäuses 19 läßt sich die Antriebsvorrichtung mit geringem Montageaufwand zuverlässig und automatisch zentriert anbringen, wobei mit den Antriebskabeln innerhalb des Antriebsgehäuses 12 ein am Getriebegehäuse 19 befindliches Antriebszahnritzel 20 in Zahneingriff gelangt.

## Patentansprüche

1. Antriebsvorrichtung für Schiebedächer für Kraftfahrzeuge, mit einem in einem Antriebsgehäuse (12) drehbar angeordneten Antriebszahnritzel (20), das an gegenüberliegenden Stellen mit schraubenlinienförmigen Arbeitswicklungen zweier Antriebskabel (8, 9) im Eingriff steht, die in zueinander parallelen Führungskanälen des Antriebsgehäuses (12) drucksteif verschiebbar geführt sind, wobei die Führungskanäle für den fluchtenden beidseitigen Anschluß von Antriebskabelführungen (6, 7) vorgesehen sind, **dadurch gekennzeichnet**, daß die Führungskanäle (15, 16) jeweils einen mittleren hohlzylindrischen Abschnitt (15) aufweisen, dessen Länge mindestens dem zweifachen Kopfkreisdurchmesser des Antriebszahnritzels (20) entspricht und dessen Durchmesser so bemessen ist, daß der hohlzylindrische Abschnitt (15) das Antriebskabel (8, 9) mit geringem Radialspiel eng umschließt, und daß an den mittleren hohlzylindrischen Abschnitt (15) zu beiden Seiten jeweils ein hohlkegelstumpfartiger Endabschnitt (16) angeschlossen ist, dessen kleinster Durchmesser mit dem Durchmesser des mittleren hohlzylindrischen Abschnitts (15) übereinstimmt und dessen größter Durchmesser mindestens so groß ist wie der Durchmesser der beidseitig anzuschließenden Antriebskabelführungen (6, 7), wobei das Antriebszahnritzel (20) in der Mitte des mittleren hohlzylindrischen Abschnitts (15) mit den Arbeitswicklungen der Antriebskabel (8, 9) eingreift.

2. Antriebsvorrichtung nach Anspruch 1, **dadurch gekennzeichnet**, daß das Antriebsgehäuse (12) mit einer zentralen Aufnahmebohrung (17) für das Antriebszahnritzel (20) versehen ist, die senkrecht zu den Führungskanälen (15, 16) gerichtet ist, diese im Bereich des Eingriffs zwischen den Antriebskabeln (8, 9) und dem Antriebszahnritzel (20) durchdringt und deren Durchmesser dem Abstand zwischen den Mittellinien der Führungskanäle (15, 16) entspricht.

3. Antriebsvorrichtung nach Anspruch 1 oder 2, **dadurch gekennzeichnet**, daß das Antriebszahnritzel (20) an einem Getriebegehäuse (19) fliegend gelagert ist, welches mit dem Antriebsgehäuse (12) unter Zwischenlage eines die Antriebskabelführungen (6, 7) aufweisenden Führungsrahmens (1) unter Zentrierung der miteinander verbundenen Teile verschraubbar ist.

4. Antriebsvorrichtung nach Anspruch 3, **dadurch gekennzeichnet**, daß die Antriebskabelführungen (6, 7) am Führungsrahmen (1) an der Stelle des Antriebsgehäuses (12) unterbrochen sind und daß das Antriebsgehäuse (12) beiderseits mit Zentriervorsprüngen (24) zwischen die Antriebskabelführungen (6, 7)unter axial spielfreier Überbrückung der Unterbrechungsstelle der Antriebskabelführungen formschlüssig einsetzbar ist.

5. Antriebsvorrichtung nach Anspruch 4, **dadurch gekennzeichnet**, daß die Zentriervorsprünge (24) durch Stufen am Antriebsgehäuse (12) gebildet sind, die jeweils aus einer der benachbarten Antriebskabelführung (6, 7) zugeordneten seitlichen Zentrierfläche (22) und einer dem stirnseitigen Ende der benachbarten Antriebskabelführung (6, 7) zugeordneten Stufenfläche (23) bestehen, wobei die Führungskanäle (15, 16) zu beiden Seiten sich jeweils zwischen zwei Stufenflächen (23) erstrecken.

6. Antriebsvorrichtung nach einem der Ansprüche 1 bis 5, **dadurch gekennzeichnet**, daß das Antriebsgehäuse (12) einteilig aus einem thermoplastischen abriebfesten Kunststoff spritzgeformt ist.

## Claims

1. Drive apparatus for sliding roofs of motor vehicles, comprising a drive pinion (20) mounted for rotation in a drive casing (12), which drive pinion engaging helically wound working windings on two drive cables (8, 9) at opposed locations, which drive cables are slidably guided in mutually parallel guiding channels of the drive casing (12), said guiding channels being provided at both ends for the aligned connection of drive cable guides (6, 7), **characterized in that** the guiding channels (15, 16) each being provided with a central hollow cylindrical portion (15), the length of which corresponds at least to twice of the addendum circle of the drive pinion (20) and which diameter is dimensioned such that the hollow cylindrical portion (15) closely surrounds the drive cable (8, 9) with little radial clearance, and that to both sides of the central hollow cylindrical portion (15) an end portion (16) is annexed shaped in the manner of a hollow truncated cone, the smallest diameter of which is identical with the central hollow cylindrical portion (15) and the largest diameter of which is at least as large as the diameter of the drive cable guides (6,7) to be connected to both ends, said drive pinion (20) engaging the working windings of the drive cables (8, 9) at the center of the central hollow cylindrical portion (15).

2. Drive apparatus according to claim 1, **characterized in that** the drive casing (12) is provided with a central seating bore (17) for the drive pinion (20), which bore being orientated perpendicular to the guide channels (15, 16), penetrating these channels within the area of engagement between the drive cables (8, 9) and the drive pinion (20), and the diameter of the channels corresponds to the spacing of the center lines of the guiding channels (15, 16).

3. Drive apparatus according to claim 1 or 2, **characterized in that** the drive pinion (20) is mounted with a onesided bearing to a gear casing (19), which is screwed to the drive casing (12) with the incorporation between them of a guide frame (1) possessing the drive cable guides (6, 7) with centring of the parts connected together.

4. Drive apparatus according to claim 3, **characterized in that** the drive cable guides (6, 7) on the guide frame (1) are interrupted at the location of the drive casing (12), and that the drive casing (12) can be inserted form-fittingly at both ends with centring projections (24) between the drive cable guides (6, 7) bridging, without axial play, the location of interruption of the drive cable guides.

5. Drive apparatus according to claim 4, **characterized in that** the centring projections (24) are formed by steps on the drive casing (12), which each consists of a lateral centring surface (22), associated with the adjacent drive cable guide (6, 7), and a step surface (23), associated with the end face of the adjacent drive cable guide (6, 7), said guide channels (15, 16) each extending at both sides between two step surfaces (23).

6. Drive apparatus according to one of the claims 1 to 5, **characterized in that** the drive casing (12) is injection moulded in one piece from a thermoplastic, wear-resistant plastics material.

## Revendications

1. Dispositif d'entraînement pour toits coulissants de véhicules automobiles, comportant un pignon denté d'entraînement (20) agencé en rotation dans un boîtier d'entraînement (12) et en engrènement à des emplacements opposés avec des spires de travail hélicoïdales de deux câbles d'entraînement (8, 9) qui sont guidés en déplacement et de façon rigide en compression dans des canaux de guidage parallèles l'un à l'autre du boîtier d'entraînement (12), les canaux de guidage étant prévus pour le branchement bilatéral en alignement de guidages de câble d'entraînement (6, 7), caractérisé en ce que les canaux de guidage (15, 16) comprennent chacun un tronçon cylindrique creux médian (15) dont la longueur correspond au moins à deux fois le diamètre du cercle de tête du pignon denté d'entraînement (20) et dont le diamètre est de telle dimension que le tronçon cylindrique creux (15) entoure étroitement avec un faible jeu radial le câble d'entraînement (8, 9), et en ce qu'au tronçon cylindrique creux médian (15) est raccordé des deux côtés un tronçon terminal respectif en forme de tronc de cône creux (16) dont le diamètre minimum coïncide avec le diamètre du tronçon cylindrique creux médian (15) et dont le diamètre maximum est au moins aussi grand que le diamètre des guidages de câble d'entraînement (6, 7) à brancher des deux côtés, le pignon denté d'entraînement (20) étant en engrènement avec les spires de travail des câbles d'entraînement (8, 9) au milieu du tronçon cylindrique creux médian (15).

2. Dispositif d'entraînement selon la revendication 1, caractérisé en ce que le boîtier d'entraînement (12) est pourvu d'un perçage de réception central (17) pour le pignon denté d'entraînement (20), qui est dirigé perpendiculairement aux canaux de guidage (15, 16), qui traverse ceux-ci dans la zone de l'engrènement entre les câbles d'entraînement (8, 9) et le pignon denté d'entraînement (20) et dont le diamètre correspond à la distance entre les lignes médianes des canaux de guidage (15, 16).

3. Dispositif d'entraînement selon l'une ou l'autre des revendications 1 et 2, caractérisé en ce que le pignon denté d'entraînement (20) est monté en porte-à-faux sur un boîtier de transmission (19) qui est vissable avec le boîtier d'entraînement (12) avec interposition d'un cadre de guidage (1) comportant les guidages de câble d'entraînement (6, 7) et avec centrage des pièces reliées l'une à l'autre.

4. Dispositif d'entraînement selon la revendication 3, caractérisé en ce que les guidages de câble d'entraînement (6, 7) sur le cadre de guidage (1) sont interrompus à l'emplacement du boîtier d'entraînement (12), et en ce que le boîtier d'entraînement (12) est susceptible d'être mis en place par coopération de formes avec des saillies de centrage (24) des deux côtés entre les guidages de câble d'entraînement (6, 7) en coiffant axialement sans jeu l'emplacement interrompu des guidages de câble d'entraînement.

5. Dispositif d'entraînement selon la revendication 4, caractérisé en ce que les saillies de centrage (24) sont formées par des gradins sur le boîtier d'entraînement (12), qui sont constitués chacun par une surface de centrage latérale (22) associée au guidage de câble d'entraînement (6, 7) voisin et par une surface en gradin (23) associée à l'extrémité frontale du guidage de câble d'entraînement (6, 7) voisin, les canaux de guidage (15, 16) s'étendant des deux côtés entre deux surfaces en gradin respectives (23).

6. Dispositif d'entraînement selon l'une quelconque des revendications 1 à 5, caractérisé en ce que le boîtier d'entraînement (12) est formé en une seule pièce par injection en matière plastique thermodurcissable résistante à l'abrasion.
